# EUROPÄISCHE PATENTSCHRIFT

(11) **EP 2 060 313 B1**
(45) Veröffentlichungstag und Bekanntmachung des Hinweises auf die Patenterteilung: **26.12.2012**
(21) Anmeldenummer: 08167468.1
(22) Anmeldetag: 24.10.2008
(51) Int. Cl.: B01D 61/14, C01G 1/02, C01G 15/00, C01G 19/02, C01G 23/00, C01G 25/02, C01G 30/00

(54) **Verfahren zur Fraktionierung oxidischer Nanopartikel durch Querstrom-Membranfiltration**
Method for fractioning oxidic nanoparticles with cross-stream membrane filtration
Procédé destiné au fractionnement de nanoparticules oxydées par filtration sur membrane à écoulement transversal

(30) Priorität: 15.11.2007 DE 102007054885
(43) Veröffentlichungstag der Anmeldung: 20.05.2009
(73) Patentinhaber: Evonik Degussa GmbH, 45128 Essen (DE)
(72) Erfinder: Wursche, Roland, 48249, Dülmen (DE); Baumgarten, Götz, 45721, Haltern am See (DE); Lortz, Wolfgang, 63607, Wächtersbach (DE); Kröll, Michael, 63589, Linsengericht (DE)

(56) Entgegenhaltungen:
- WO-A-01/32799
- WO-A-97/19745
- WO-A-98/45019
- DE-A1- 19 950 496
- US-A1- 2008 031 806

## Beschreibung

Die vorliegende Erfindung betrifft ein Verfahren zur Fraktionierung von Dispersionen oxidischer Nanopartikel durch Membranfiltration. Sie betrifft weiterhin Dispersionen oxidischer Nanopartikel, die nach dem erfindungsgemäßen Verfahren erhalten werden.

In den letzten Jahren ist das Interesse an nanoskaligen Partikeln, also Partikeln mit einem Durchmesser kleiner als 1 µm, sowohl von akademischer als auch von industrieller Seite her stetig gewachsen, da Nanopartikel auf Grund ihrer Eigenschaften ein großes Potential im Hinblick auf Anwendungen beispielsweise in der Elektronik, der Optik und in chemischen Produkten zugeschrieben wird. Von besonderem Interesse sind dabei Partikel, deren Durchmesser im Bereich unterhalb von 100 nm liegt. Hier treten üblicherweise die sogenannten "Nano-Effekte", beispielsweise Quanteneffekte, auf, die unter anderem auf den Einfluss der großen Partikeloberfläche zurückgeführt werden können. Zudem nimmt bei diesen Partikeln die Lichtstreuung so weit ab, dass eine zunehmende Transparenz von "Nano-Composites" beobachtet werden kann, bei denen die beschriebenen Partikel in eine Matrix, häufig aus Kunststoffen oder Lacken, eingebettet werden, um deren Eigenschaften zu verbessern.

Wichtig für die Anwendung von Nanopartikeln in Composites ist jedoch, dass die sphärischen Partikel einerseits nicht agglomerieren, andererseits in einer engen Größenverteilung vorliegen. Bereits durch kleine Anteile gröberer Partikel oder von Agglomeraten können die Eigenschaften der Composites negativ beeinflusst werden. Insbesondere gilt dies für die Transparenz. Oftmals werden Nanopartikel zur Anpassung an die jeweilige Matrix modifiziert, was eine bessere Dispergierung und damit Verhinderung von Agglomeratbildung bewirken soll.

Die Synthese von Nanopartikeln kann nach verschiedenen Verfahren vorgenommen werden. Neben der Gasphasensynthese kann in Lösung gearbeitet werden, wobei auch Template Verwendung finden. Eine weitere Möglichkeit besteht in der Vermahlung gröberer Partikel. Dieser Ansatz zeichnet sich dadurch aus, dass er kostengünstiger ist als die Synthese aus molekularen Vorstufen.

Sowohl bei der Synthese der Partikel aus molekularen Vorstufen als auch bei der Vermahlung erhält man stets ein Produkt, das eine Größenverteilung aufweist. Während bei Partikeln im Mikrometer-Bereich eine Abtrennung gröberer Partikel über Sedimentation, Zentrifugation oder Siebfiltration erreicht werden kann, sind diese Methoden bei Nanopartikeln nur eingeschränkt nutzbar. Liegen die Nanopartikel in einer Dispersion vor, kann die Abtrennung gröberer Partikel möglicherweise auch über Sedimentation oder Zentrifugation erfolgen, wobei hier jedoch der extreme Oberflächen- und Zeitbedarf sowie die diskontinuierliche Prozessführung so nachteilig sind, dass diese Verfahren praktisch kaum von Bedeutung sein können. Ebenso sind Methoden wie Size Exclusion Chromatography (SEC) oder Gel-Elektrophorese nicht für größere Mengen geeignet.

Für viele Anwendungen sind Nanopartikel von Interesse, die aus Metalloxiden bestehen, beispielsweise zur Herstellung von UV-geschützten Polymer-Composites oder von fluoreszierenden Materialien (Journal of Nanoscience and Nanotechnology, 2006, 6, 409-413). Für die industrielle Praxis wäre es deshalb hilfreich, über ein kontinuierlich arbeitendes, einfach durchzuführendes Verfahren zur Fraktionierung oxidischer Nanopartikel zu verfügen. Es ist verschiedentlich vorgeschlagen worden, zu diesem Zweck Membranfiltrationsverfahren einzusetzen. Dabei ist zu beachten, dass die Trennung an einer Membran durch die spezifische Wechselwirkung zwischen Partikel und Membran beeinflusst ist.

Um generell Partikel nach vorgegebenen Kriterien wie beispielsweise dem Teilchendurchmesser aus Suspensionen zu trennen, werden häufig Filtrationstechniken eingesetzt. Hier finden im Allgemeinen "Dead-end-Filtrationen" als "batch"-Prozess oder "Cross-flow-Filtrationen" als dynamischer Prozess Verwendung. Bei der Dead-end-Filtration wird das gesamte zu filtrierende Volumen direkt durch das Filtrationsmedium geführt, wobei die abgeschiedenen Partikel in der Regel einen Kuchen aufbauen können, der seinerseits das Ergebnis der Filtration maßgeblich mitbestimmt. Das Filtrationsergebnis wird hier also neben den Eigenschaften des Filtrationsmediums vor allem durch den gebildeten und sich mit der Prozesszeit verändernden Filterkuchen bestimmt. Demnach kann die kuchenbildende Filtration nicht zur Klassierung von Partikeldispersionen eingesetzt werden. Einzig die nach dem Dead-end-Verfahren arbeitende Tiefenfiltration ist dadurch in Grenzen in der Lage, klassierend zu filtrieren, dass die abzutrennenden Partikel in die Struktur des Filtermediums eindringen und aufgrund der Partikelhaftung an der inneren Oberfläche des Filtermediums abgetrennt werden. Die Begrenzungen dieses Verfahrens liegen darin, dass nur sehr verdünnte Dispersionen behandelt werden können und die klassierende Wirkung eine hohe natürliche Unschärfe hat, wodurch auch signifikante Mengen des Zielproduktes im Filtermedium haften bleiben und damit verloren gehen.

Bei der Cross-flow-Filtration wird das zu filtrierende Medium tangential am Filtrationsmedium vorbeigeführt. Die Porengröße des Filtrationsmediums bestimmt dabei die Ausschlussgrenze. Wichtige Anwendungen sind die Mikrofiltration, die Ultrafiltration sowie die Nanofiltration.

Die Nachteile der Dead-end-Filtrationsverfahren versucht die Cross-flow-Filtration (Querstromfiltration) dadurch zu umgehen, dass hier im Gegensatz zu dieser konventionellen Filtration das Filtermedium tangential angeströmt wird. Der Zulaufstrom wird dabei in einen Filtrationsstrom durch das Filtermedium und die Überströmung parallel zum Filtermedium aufgeteilt. In der Membrantechnik wird der Strom, der durch die Membran strömt, als Permeat bezeichnet. Das auf der Membran zurückbleibende Material wird als Retentat bezeichnet. Durch diese Strömungsführung wird ein Rücktransport der zurückgehaltenen Komponente von der Oberfläche des Filtrationsmediums in den Retentatstrom ermöglicht. Somit wird der Bildung von Ablagerungen und Deckschichten auf dem Filtrationsmedium entgegengewirkt.

In Advanced Materials 2005, 17(5), 532-535 wird beschrieben, wie zur Fraktionierung von metallischen Nanopartikeln die Technik der Membran-Querstromfiltration zu nutzen ist. Dazu wird eine spezielle Membran hergestellt, die nanoskalige Kanäle enthält. Die Versuche sind im kleinsten Labormaßstab durchgeführt worden und bieten keine Hinweise für eine Übertragung in den technischen Maßstab. Über die zur Fraktionierung von oxidischen Nanopartikeln notwendigen Membranen wird weder im Hinblick auf ihren Porenradius noch in Bezug auf ihre Zusammensetzung eine Aussage gemacht. Darüber hinaus wird festgestellt, dass eine Klassierung von Nanopartikeln mit herkömmlichen Membranen nicht möglich ist.

In Journal of Membrane Science 2006, 284, 361-372 wird die Membran-Querstofffiltration einer Dispersion von Siliziumdioxid-Nanopartikeln beschrieben. Hier werden jedoch keine Angaben über die Möglichkeit einer Fraktionierung gemacht, vielmehr handelt es sich hier um eine Untersuchung zur Bildung der aus Nanopartikel gebildeten dynamischen Deckschicht, die eine Fraktionierung unmöglich macht.

Die Firma Bokela, Karlsruhe vertreibt ein Siebfiltrationssystem (Dynofilter), über das mit dynamischer Siebfiltration Grobkornanteile bis hinunter zur 10 µm aus einer Partikeldispersion abgetrennt werden können. Über die Möglichkeit, in diesem System Membranen einzusetzen, ist nichts bekannt.

Langmuir 1997, 13, 1820-1826 beschreibt Untersuchungen zur Membranfiltration von Polymerpartikeln mit permanenter Oberflächenladung. Hier wird der Rückhalt von Nanopartikein durch gezielte Einführung von Oberflächenladungen verbessert. Über Klassierungseffekte wird nichts ausgesagt.

In Anal. Chem. 2006, 78, 8105-8112 wird geschildert, wie organische Kolloide durch Querstrom-Ultrafiltration aus wässriger Lösung abgetrennt werden. Dabei werden Nanopartikel zu mehr als 99% über die Membran zurückgehalten.

US 2004/0067485 A1 beschreibt die Synthese von nanoskaligen Halbleitern auf Basis von Zink und Cadmium, kombiniert mit den Elementen S, Se und Te, wobei ein Protein als Templat eingesetzt wird. Es wird angegeben, dass der entstehende Komplex aus z. B. Zinksulfid/Apoferritin durch Dead-end-Membranfiltration fraktionierbar sei, wobei der Durchmesser der Poren der eingesetzten Membran deutlich höher liegt als der Durchmesser der Partikel. Eine große Auswahl an Membranmaterialien wird genannt, jedoch sind keine Beispiele für das Filtrationsverfahren aufgeführt. Mit diesem Verfahren kann keine klassierende Nanopartikelfiltration in einem technischen Maßstab durchgeführt werden, da sich ein Filterkuchen bilden würde. Damit bleibt das vorgeschlagene Verfahren nur im Labormaßstab durchführbar, wo der erforderliche, häufige Filterwechsel einfach möglich ist.

WO 2006/116798 A1 beschreibt die Herstellung radioaktiver Nanopartikel auf Basis von metallischem Technetium, die einen Membran-Filtrationsprozess im Dead-end-Verfahren durchlaufen. Dabei wird eine hydrophile Membran verwendet. Auch hier wird also nach dem Dead-end-Verfahren gearbeitet, was bereits bei geringer Agglomeration der Nanopartikel zu einer nahezu vollständigen Abscheidung aller Partikel an der Membran führt. Das hier vorgeschlagene Verfahren zur Nanopartikelfraktionierung ist daher nur bei sehr kleinen Nanopartikelkonzentrationen und im Labormaßstab durchführbar.

Die DE 199 50 496 A1 offenbart ein Verfahren zur Herstellung von Nanopartikelkonzentraten, bei dem man eine Dispersion von Nanopartikeln einer Ultrafiltration unterwirft und dabei in ein Permeat und ein Retentat trennt, wobei letzteres mindestens 90 % der eingesetzten Nanopartikel enthält. Zielprodukt ist hierbei das Retentat; es wird angestrebt, dass möglichst wenig der Nanopartikel mit dem Permeat verlorengeht. Die Ultrafiltration kann dabei im cross-flow-Modus betrieben werden.

In der WO97/19745 wird ein typischer Vertreter eines Cross-rotation-Filtrationsgeräts mit statischen Filterplatten und dazwischen angeordneten Rührscheiben beschrieben. Allerdings wird dort nicht offenbart, dass in dieser Apparatur Dispersionen eingesetzt werden können, die Nanopartikel enthalten, geschweige denn, dass hiermit ein Permeat erhalten werden kann, das Nanopartikel enthält.

Nach dem Stand der Technik ist kein im technischen Maßstab einsetzbares Membranverfahren bekannt, bei welchem aus einer Partikeldispersion, die überwiegend Nanopartikel aber auch gröbere Partikel enthält, das Feingut herausklassiert werden kann. Alle Verfahren nach dem Stand der Technik bilden auf der Membranoberfläche eine Deckschicht, so dass zwar eine Abtrennung, aber keine Klassierung von Nanopartikeln aus einer Dispersion ermöglicht wird.

Die Aufgabe der vorliegenden Erfindung bestand deshalb darin, ein Verfahren zur Fraktionierung einer Dispersion metalloxidischer Nanopartikel bereitzustellen, welches die Nachteile des Standes der Technik, insbesondere den Aufbau einer Deckschicht auf der Membran, überwindet, und somit eine Klassierung von Nanopartikeln auch im großtechnischen Maßstab ermöglicht.

Diese Aufgabe wird gelöst durch ein Verfahren zur Fraktionierung einer Dispersion oxidischer Nanopartikel, welches dadurch gekennzeichnet ist, dass mindestens ein Verfahrensschritt ein Membran-Querstromfiltrationsschritt ist, wobei eine Überströmung der Membran mit der Dispersion durch angetriebene rotierende Teile nach dem Cross-rotation-Prinzip erzeugt wird und als Permeat eine Dispersion erhalten wird, bei der mindestens 50 % der Nanopartikel einen Partikeldurchmesser kleiner gleich 80 nm, bevorzugt kleiner gleich 50 nm und besonders bevorzugt kleiner gleich 30 nm aufweisen, und wobei der Filtrationsschritt mindestens einem Verfahrensschritt folgt, in dem eine Vermahlung erfolgt, und das Retentat des Filtrationsschrittes in den Vermahlungsschritt zurückgeführt wird.

Überraschenderweise wurde gefunden, dass durch das erfindungsgemäße Verfahren der Aufbau einer Deckschicht auf der Membran verhindert und die Fraktionierung einer Dispersion oxidischer Nanopartikel ermöglicht wird.

Das erfindungsgemäße Verfahren wird mit einer Filtrationseinheit durchgeführt, die nach dem Cross-rotation(CR)-Prinzip arbeitet. Es sind Filtrationsmaschinen, in denen Scherkräfte und Strömungen parallel zum Filtermedium durch bewegte Einbauten erzeugt werden. Dies kann auch das Filtermedium selbst sein (z.B. rotierende Membranen). Eine mögliche Ausführung einer solchen Filtermaschine ist der Cross-rotation-Filter. Im Gegensatz zur Cross-flow-Filtration wird bei der Cross-rotation-Filtration durch Einsatz zusätzlicher Rotoren die Überströmung entkoppelt von der Einspeisung und dem Druckaufbau durchgeführt. Bei einem typischen CR-Filter werden Filtrationsmittel und Rotoren sandwichartig übereinandergestapelt. In der Mitte des Stapels rotiert eine Welle, die die Rotoren antreibt, wodurch mittlere, d.h. räumlich über das gesamte Filtermedium gemittelte Überströmgeschwindigkeiten von deutlich über 6 m/s erzielt werden können. Das eingespeiste Medium wird schichtweise durch den Plattenstapel geführt. In den Sektionen des Plattenstapels erfolgt stufenweise eine Aufkonzentrierung des Mediums. Durch Entkopplung der Einspeisung (mittels einer Pumpe) und der Überströmung der Membran (mittels Rotoren) werden hohe spezifische Filtratflüsse bei geringen Systemdrücken erzielt. Diese Systeme mit rotierenden Einbauten werden bisher dort eingesetzt, wo sehr kleine Teilchen oder klebrige Substanzen abgetrennt und sehr hoch aufkonzentriert werden müssen.

Die Mikrofiltration, die Ultrafiltration sowie die Nanofiltration werden auch zu den druckgetriebenen Membranprozessen gezählt. Als Membranen werden allgemein flächige Gebilde bezeichnet, die eine Barriere zwischen zwei fluiden Phasen bilden und die einen selektiven Stoffaustausch zwischen beiden Seiten ermöglichen. Demnach ist die Membran ein Filtermedium, welches eine definierte Trenngrenze aufweist bzw. Teilchen einer bestimmten Größe in Gegenwart einer treibenden Kraft (Druck) zurückhält. Die Art der treibenden Kraft sowie die Druck- und Strömungsverhältnisse an der Membran in Verbindung mit der Beschaffenheit dieser entscheiden über das Trennergebnis. Die Einteilung synthetischer Membranen in verschiedene Klassen erfolgt anhand ihrer Strukturen, Aggregatzustände und des elektrochemischen Verhaltens. Eine Membran in dem hier verwendeten Sinn weist Poren mit einen Porendurchmesser von bis zu 10 µm auf. Bei größeren Porendurchmessern wird von einem Sieb gesprochen.

Als Membran kann jede handelübliche Membran verwendet werden, beispielsweise aus Polyethylen, Polytetrafluorethylen, Polysulfon oder Cellulose. Bevorzugt sind symmetrische Membranen, d. h. Membranen, die über den gesamten Querschnitt einen konstanten Porendurchmesser aufweisen. Die erfindungsgemäß eingesetzten Membranen haben einen Porendurchmesser von bis zu 10 µm, bevorzugt zwischen 0,01 und 5 µm, besonders bevorzugt zwischen 0,1 und 1 µm.

Die in dem erfindungsgemäßen Verfahren erzeugten mittleren Überströmgeschwindigkeiten betragen zwischen 5 und 25 m/s, bevorzugt mindestens 8 m/s, und besonders bevorzugt mindestens 10 m/s. Realisiert werden diese Bedingungen als Relativgeschwindigkeit zwischen zu filtrierendem Medium und Membran durch Rotation von Einbauten (z. B. Rührer). Die mittlere Überströmgeschwindigkeit wird ermittelt durch Messung der Geschwindigkeit über das gesamte Filtrationsmedium und anschließende Mittelwertbildung. Besonders vorteilhaft ist dabei, dass diese Überströmgeschwindigkeit vom Druckaufbau entkoppelt wird, wodurch die oben genannten hohen Querstromgeschwindigkeiten bei kleinen Transmembrandrücken (<1 bar) erreicht werden. Unter solchen Bedingungen kann ein Deckschichtaufbau nahezu vollständig verhindert werden. Ergänzend kann dem Deckschichtaufbau durch eine periodische Rückspülung der Membran mit Permeat oder einer Flüssigkeit (z.B. Wasser) oder eines Flüssigkeits-Gasgemisches (z.B. Wasser und Druckluft) entgegengewirkt werden.

Als Nanopartikel im Sinne des erfindungsgemäßen Verfahrens können Partikel beliebiger Metalloxide eingesetzt werden. Die Metalloxide können beispielsweise über Flammenpyrolyse, Fällungsverfahren oder über Sol-Gel-Prozesse hergestellt werden. Die Metalloxide können auch Mischoxide sein, die sich von zwei oder mehreren verschiedenen Metallen ableiten. Bevorzugt sind Nanopartikel aus Titanoxid, Ceroxid, Aluminiumoxid, Siliziumdioxid, Zirkoniumdioxid, Zinkoxid, Indiumzinnoxid, Antimonzinnoxid, Bariumtitanat oder aus Mischoxiden, die diese Komponenten enthalten. Des Weiteren können in der Dispersion auch mehrere verschiedene Metalloxide als Gemische vorliegen. Die Herstellung von Dispersionen metalloxidischer Nanopartikel mittels einer Vermahlung in flüssiger Phase kann beispielsweise wie in DE 10204470 A1 beschrieben erfolgen. Das Prinzip, Flüssigkeitsstrahlen unter hohem Druck aufeinander zu schießen, kollidieren zu lassen und infolgedessen darin enthaltenes Mahlgut zu zerkleinern und zu dispergieren, wird auch als wet-jet-milling bezeichnet. Solche Dispersionen weisen herstellungsbedingt eine asymmetrische Partikelgrößenverteilung auf. Weitere Methoden zur Herstellung von Dispersionen sind beispielsweise der gegebenenfalls kombinierte Einsatz von Strahlmühlen, Rührwerkskugelmühlen, Ultraschall-Dispergiereinrichtungen, Rotor-Stator-Maschinen, Ultra-Turrax, Planetenknetern/-mixern oder Hochdruckhomogenisatoren. Die hier entstehenden Dispersionen können auch symmetrische Partikelgrößenverteilungen aufweisen und eignen sich ebenfalls für das erfindungsgemäße Verfahren.

Die im Rahmen des beschriebenen Verfahrens verwendete Dispersion kann beispielsweise direkt aus einem Metalloxid aus der Synthese oder durch Redispergierung des Feststoffanteils einer zuvor getrockneten Dispersion desselben Metalloxids gewonnen werden. Vor oder auch während des Dispergierprozesses können beispielsweise Dispergierhilfsmittel zugesetzt, der pH-Wert eingestellt oder eine chemische Oberflächenmodifikation des Metalloxids (beispielsweise durch Verwendung reaktiver Silanverbindungen oder Verbindungen, die elektrostatisch an die Partikel binden) durchgeführt werden. Dies gilt auch für den Fall, dass eine Redispergierung eines Metalloxids durchgeführt wird. Als flüssige Komponente der Dispersion können Wasser, wasserbasierende Flüssigkeiten, organische Flüssigkeiten oder ionische Flüssigkeiten genutzt werden oder Gemische von mehreren Vertretern einer der genannten Stoffgruppen oder Gemische von Vertretern unterschiedlicher Stoffgruppen. Bei den Flüssigkeiten kann es sich auch um Lösungen handeln.

Zusätzlich können in der flüssigen Komponente der Dispersion noch gelöste oder ausreichend fein dispergierte Bestandteile präsent sein, beispielsweise Stabilisatoren, Inhibitoren, Alterungsschutzmittel, Biozide, Farbstoffe, Antistatika, Salze, oberflächenaktive Stoffe oder Korrosionsschutzmittel.

Beim erfindungsgemäßen Verfahren wird der Membran-Querstromfiltrationsschritt mit einem vorgeschalteten Mahlverfahren derart gekoppelt, dass abgetrenntes Grobgut (Retentat) in den Mahlprozess zurückgeführt und das Feingut (Permeat 1) aus dem Prozess ausgeschleust wird. Das Permeat 1 wird anschließend gegebenenfalls durch einen Separations- bzw. Konzentrationsschritt z. B. mittels Ultrafiltration auf einen höheren Feststoffgehalt gebracht, während das bei der Konzentrierung erhaltene Permeat 2, das im Wesentlichen frei von Nanopartikeln ist und im Folgenden als Klarlauf bezeichnet wird, oder ein dem Permeat 2 entsprechendes Kondensat als "Waschwasser" in den Prozess, d. h. in den vorherigen Filtrationsschritt zurückgeführt wird. Es kann aber auch von außen "Waschwasser" zugesetzt werden. In einer bevorzugten Ausführungsform wird das Retentat des Filtrationsschrittes über eine Diafiltration gewaschen. Dabei wird dem Retentat kontinuierlich neues "Waschwasser" zugeführt, bis das alte "Waschwasser" vollständig über die Membran ausgetauscht ist und restliche im Retentat vorhandene Nanopartikel durch die Membran in das Permeat gewandert sind. In einer bevorzugten Ausführungsform erfolgt der gesamte Prozess kontinuierlich.

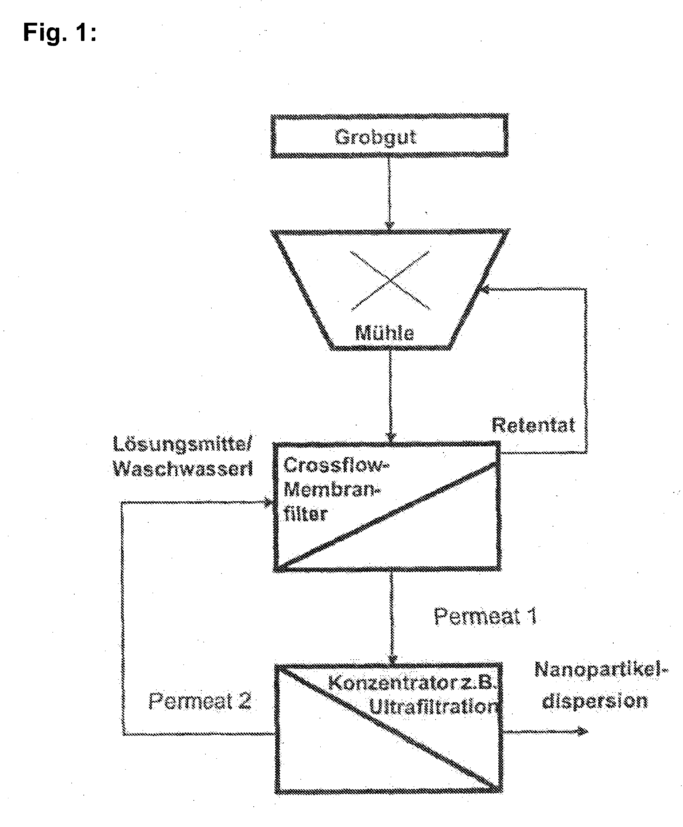

Figur 1 zeigt das Grundfließbild einer möglichen Prozessführung.

Um den Feinanteil aus einer Dispersion weitergehend herauszutrennen, kann es erforderlich sein, zusätzliches "Waschwasser" ggf. in Verbindung mit Dispersionsmittel einzusetzen. An Stelle des Begriffes Wasser bzw. "Waschwasser" kann auch allgemeiner der Begriff Flüssigkeit gebraucht werden, da neben Wasser und wasserbasierenden Flüssigkeiten auch flüssige organische Verbindungen oder ionische Flüssigkeiten in Frage kommen. Die Flüssigkeiten können auch Gemische mehrerer Stoffe derselben Substanzklasse sein oder Gemische von Vertretern aus den genannten Gruppen von Flüssigkeiten, die sowohl die Grundlage der Nanopartikel-Dispersion bilden können, als auch als "Waschwasser" genutzt werden können.

Die vorliegende Erfindung wird durch die folgenden Ausführungsbeispiele näher beschrieben, ohne dass ihr Schutzbereich dadurch eingegrenzt werden soll.

### Beispiele

Die nachfolgenden Versuche wurden an einer 30%igen Dispersion von Titandioxid in Wasser vorgenommen, wie sie beispielsweise durch ein in DE 10204470 A1 beschriebenes Verfahren hergestellt werden kann. Die verwendete Dispersion hat einen D₅₀-Wert von ca. 0,09 µm sowie einen D₉₀-Wert von ca. 0,2 µm, d. h. 50% der Partikel weisen einen Partikeldurchmesser kleiner gleich 0,9 µm auf, und 90% weisen einen Partikeldurchmesser kleiner gleich 0,2 µm auf.

Folgende handelübliche Membranen der Fa. Millipore wurden verwendet:
- **Versuch 1:**: Membran aus Polytetrafluorethylen mit einem Porendurchmesser von 1 µm
- **Versuch 2:**: Membran aus Polytetrafluorethylen mit einem Porendurchmesser von 0,45 µm
- **Versuch 3:**: Membran aus Polytetrafluorethylen mit einem Porendurchmesser von 0,2 µm

Die Rührerdrehzahl betrug jeweils 1264 min⁻¹. Dies entspricht einer durchschnittlichen Überströmgeschwindigkeit von ca. 9 m/s.

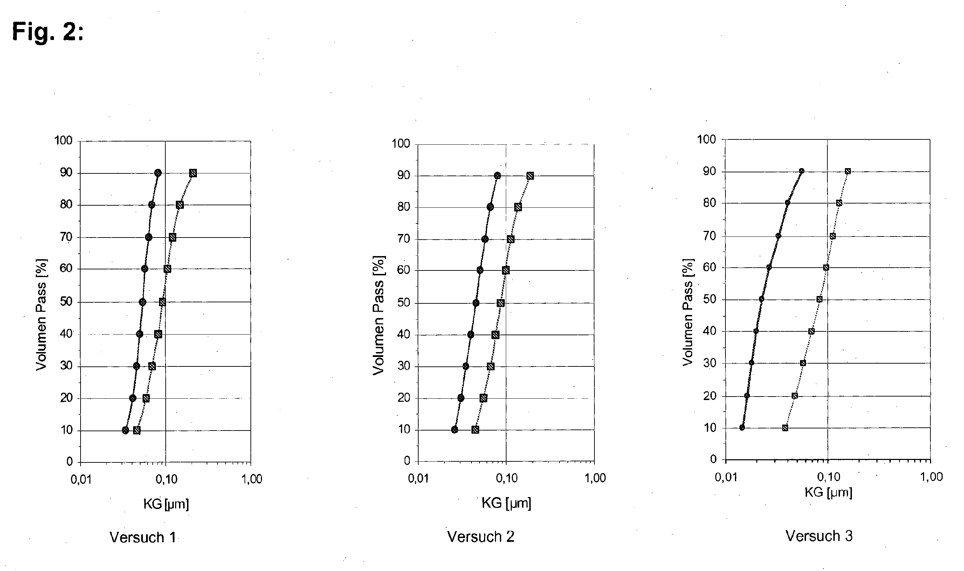

Gemessen wurde die Partikelgrößenverteilung jeweils vor (Messreihe mit eckigen Messpunkten) und nach der Fraktionierung (Messreihe mit runden Messpunkten) (Fig. 2).

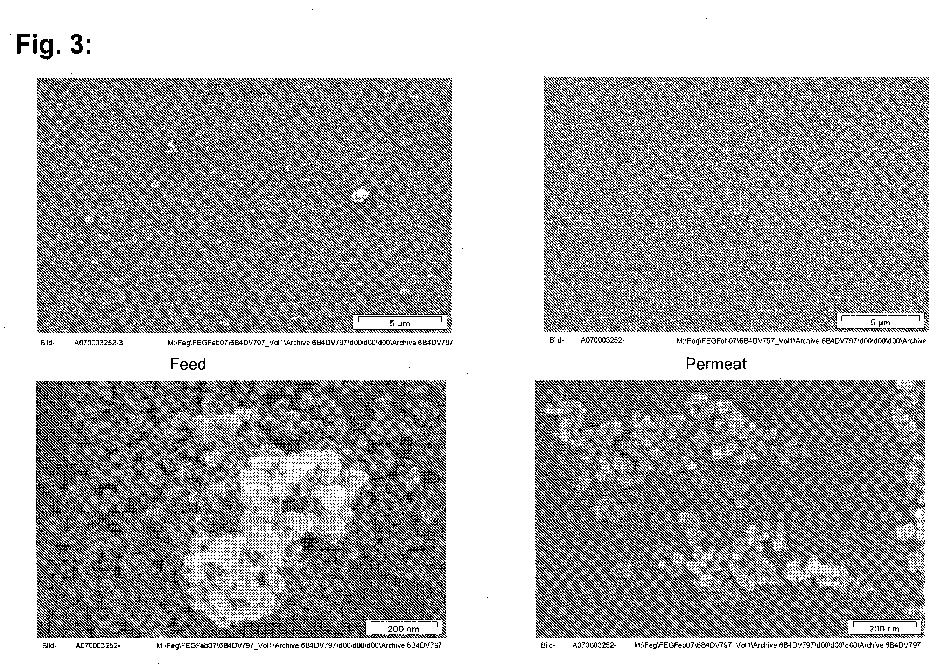

Von der Dispersion des Versuchs Nr. 3 wurden zusätzlich RasterelektronenmikroskopAufnahmen in zwei unterschiedlichen Auflösungen gemacht (Detektor UHR, Hochspannung 10 bzw. 20 kV) (Fig. 3).

Die Ergebnisse der Versuche 1 bis 3 machen eindrucksvoll deutlich, dass durch das erfindungsgemäße Verfahren die Partikelgrößenverteilung der eingesetzten Dispersion dergestalt zu kleineren Partikelgrößen verschoben wird, dass nach erfolgter Fraktionierung keine Partikel mit einem Partikeldurchmesser von 100 nm oder darüber in der Dispersion enthalten sind. Dieser Befund wird auch rein qualitativ durch die Rasterelektronenmikroskopaufnahmen gestützt.

## Patentansprüche

1. Verfahren zur Fraktionierung einer Dispersion oxidischer Nanopartikel,
**dadurch gekennzeichnet,**
**dass** mindestens ein Verfahrensschritt ein Membran-Querstromfiltrationsschritt ist, wobei eine Überströmung der Membran mit der Dispersion durch angetriebene rotierende Teile nach dem Cross-rotation-Prinzip erzeugt wird und als Permeat eine Dispersion erhalten wird, bei der mindestens 50 % der Nanopartikel einen Partikeldurchmesser kleiner gleich 80 nm aufweisen, und wobei der Filtrationsschritt mindestens einem Verfahrensschritt folgt, in dem eine Vermahlung erfolgt, und das Retentat des Filtrationsschrittes in den Vermahlungsschritt zurückgeführt wird.

2. Verfahren nach Anspruch 1,
**dadurch gekennzeichnet,**
**dass** die Dispersion direkt über der Membran gerührt wird.

3. Verfahren nach Anspruch 1,
**dadurch gekennzeichnet,**
**dass** in dem Filtrationsschritt als Filtrationsmittel eine Membran mit einem Porendurchmesser zwischen 0,01 µm und 5 µm verwendet wird.

4. Verfahren nach Anspruch 1,
**dadurch gekennzeichnet,**
**dass** in dem Filtrationsschritt als Filtrationsmittel eine Membran mit einem Porendurchmesser zwischen 0,1 µm und 1 µm verwendet wird.

5. Verfahren nach mindestens einem der Ansprüche 1 bis 4,
**dadurch gekennzeichnet,**
**dass** der Filtrationsschritt bei einer mittleren Überströmgeschwindigkeit der Dispersion über die Membran zwischen 5 und 25 m/s erfolgt.

6. Verfahren nach mindestens einem der Ansprüche 1 bis 4,
**dadurch gekennzeichnet,**
**dass** der Filtrationsschritt bei einer mittleren Überströmgeschwindigkeit der Dispersion über die Membran von mindestens 8 m/s erfolgt.

7. Verfahren nach mindestens einem der Ansprüche 1 bis 4,
**dadurch gekennzeichnet,**
**dass** der Filtrationsschritt bei einer mittleren Überströmgeschwindigkeit der Dispersion über die Membran von mindestens 10 m/s erfolgt.

8. Verfahren nach mindestens einem der Ansprüche 1 bis 7,
**dadurch gekennzeichnet,**
**dass** die oxidischen Nanopartikel Partikel aus Titanoxid, Ceroxid, Aluminiumoxid, Siliziumdioxid, Zirkoniumdioxid, Zinkoxid, Indiumzinnoxid, Antimonzinnoxid, Bariumtitanat oder aus Mischoxiden sind, die diese Komponenten enthalten.

9. Verfahren nach mindestens einem der Ansprüche 1 bis 8,
**dadurch gekennzeichnet,**
**dass** die Vermahlung mit einer Kugelmühle, Rührwerkskugelmühle oder einer wet-jet-mill vorgenommen wird.

10. Verfahren nach mindestens einem der Ansprüche 1 bis 9,
**dadurch gekennzeichnet,**
**dass** das Retentat des Filtrationsschrittes über eine Diafiltration gewaschen wird.

11. Verfahren nach mindestens einem der Ansprüche 1 bis 10,
**dadurch gekennzeichnet,**
**dass** das Filtrat des Filtrationsschrittes in einem weiteren Separationsschritt aufkonzentriert wird.

12. Verfahren nach Anspruch 11,
**dadurch gekennzeichnet,**
**dass** der nachfolgende Separationsschritt ein Ultrafiltrationsschritt ist.

13. Verfahren nach mindestens einem der Ansprüche 11 bis 12,
**dadurch gekennzeichnet,**
**dass** der Klarlauf des weiteren Separationsschrittes in den vorherigen Filtrationsschritt zurückgeführt wird.

14. Verfahren nach mindestens einem der Ansprüche 1 bis 13,
**dadurch gekennzeichnet,**
**dass** der Filtrationsschritt mit einer periodischen Rückspülung der Membran erfolgt.

15. Verfahren nach mindestens einem der Ansprüche 1 bis 14,
**dadurch gekennzeichnet,**
**dass** die Ausgangsdispersion vor dem Membran-Querstromfiltrationsprozess verdünnt wird.

## Claims

1. Method of fractionating a dispersion of oxidic nanoparticles,
**characterized in that**
at least one step of the method is a membrane crossflow filtration step, the dispersion being caused to flow over the membrane in accordance with the cross-rotation principle by means of driven rotating parts and a dispersion being obtained as permeate, in which at least 50% of the nanoparticles have a particle diameter of less than or equal to 80 nm, and the filtration step following at least one step of the method in which there is grinding, and the retentate of the filtration step being returned to the grinding step.

2. Method according to Claim 1,
**characterized in that**
the dispersion is stirred directly over the membrane.

3. Method according to Claim 1,
**characterized in that**
in the filtration step a membrane having a pore diameter between 0.01 µm and 5 µm is used as filtration medium.

4. Method according to Claim 1,
**characterized in that**
in the filtration step a membrane having a pore diameter between 0.1 µm and 1 µm is used as filtration medium.

5. Method according to at least one of Claims 1 to 4,
**characterized in that**
the filtration step takes place with an average flow rate of the dispersion over the membrane between 5 and 25 m/s.

6. Method according to at least one of Claims 1 to 4,
**characterized in that**
the filtration step takes place with an average flow rate of the dispersion over the membrane of at least 8 m/s.

7. Method according to at least one of Claims 1 to 4,
**characterized in that**
the filtration step takes place with an average flow rate of the dispersion over the membrane of at least 10 m/s.

8. Method according to at least one of Claims 1 to 7,
**characterized in that**
the oxidic nanoparticles are particles of titanium oxide, cerium oxide, aluminium oxide, silicon dioxide, zirconium dioxide, zinc oxide, indium tin oxide, antimony tin oxide, barium titanate or of mixed oxides which contain these components.

9. Method according to at least one of Claims 1 to 8,
**characterized in that**
the grinding is performed with a ball mill, stirred ball mill or wet-jet mill.

10. Method according to at least one of Claims 1 to 9,
**characterized in that**
the retentate of the filtration step is washed via a diafiltration.

11. Method according to at least one of Claims 1 to 10,
**characterized in that**
the filtrate of the filtration step is concentrated in a further separation step.

12. Method according to Claim 11,
**characterized in that**
the subsequent separation step is an ultrafiltration step.

13. Method according to either or both of Claims 11 and 12,
**characterized in that**
the clear fraction of the further separation step is returned to the preceding filtration step.

14. Method according to at least one of Claims 1 to 13,
**characterized in that**
the filtration step takes place with periodic backwashing of the membrane.

15. Method according to at least one of Claims 1 to 14,
**characterized in that**
the initial dispersion is diluted prior to the membrane crossflow filtration operation.

## Revendications

1. Procédé de fractionnement d'une dispersion de nanoparticules oxydiques, **caractérisé en ce qu'**au moins un étape de procédé est une étape de filtration tangentielle sur membrane, un écoulement de la dispersion sur la membrane étant généré par des parties rotatives entraînées selon le principe de rotation transversale et une dispersion dans laquelle au moins 50 % des nanoparticules présentent un diamètre de particule inférieur ou égal à 80 nm étant obtenue en tant que perméat, et l'étape de filtration suivant au moins une étape de procédé lors de laquelle un broyage a lieu, et le rétentat de l'étape de filtration étant recyclé dans l'étape de broyage.

2. Procédé selon la revendication 1, **caractérisé en ce que** la dispersion est agitée directement sur la membrane.

3. Procédé selon la revendication 1, **caractérisé en ce qu'**une membrane ayant un diamètre de pores compris entre 0,01 µm et 5 µm est utilisée dans l'étape de filtration en tant que moyen de filtration.

4. Procédé selon la revendication 1, **caractérisé en ce qu'**une membrane ayant un diamètre de pores compris entre 0,1 µm et 1 µm est utilisée dans l'étape de filtration en tant que moyen de filtration.

5. Procédé selon au moins l'une quelconque des revendications 1 à 4, **caractérisé en ce que** l'étape de filtration a lieu à une vitesse d'écoulement moyenne de la dispersion sur la membrane comprise entre 5 et 25 m/s.

6. Procédé selon au moins l'une quelconque des revendications 1 à 4, **caractérisé en ce que** l'étape de filtration a lieu à une vitesse d'écoulement moyenne de la dispersion sur la membrane d'au moins 8 m/s.

7. Procédé selon au moins l'une quelconque des revendications 1 à 4, **caractérisé en ce que** l'étape de filtration a lieu à une vitesse d'écoulement moyenne de la dispersion sur la membrane d'au moins 10 m/s.

8. Procédé selon au moins l'une quelconque des revendications 1 à 7, **caractérisé en ce que** les nanoparticules oxydiques sont des particules d'oxyde de titane, d'oxyde de cérium, d'oxyde d'aluminium, de dioxyde de silicium, de dioxyde de zirconium, dioxyde de zinc, dioxyde d'indium et d'étain, dioxyde d'antimoine et d'étain, de titanate de baryum ou d'oxydes mixtes contenant ces composants.

9. Procédé selon au moins l'une quelconque des revendications 1 à 8, **caractérisé en ce que** le broyage est réalisé avec un broyeur à boulets, un broyeur à boulets à agitateur ou un broyeur à jet humide.

10. Procédé selon au moins l'une quelconque des revendications 1 à 9, **caractérisé en ce que** le rétentat de l'étape de filtration est lavé par une diafiltration.

11. Procédé selon au moins l'une quelconque des revendications 1 à 10, **caractérisé en ce que** le filtrat de l'étape de filtration est concentré dans une étape de séparation supplémentaire.

12. Procédé selon la revendication 11, **caractérisé en ce que** l'étape de séparation ultérieure est une étape d'ultrafiltration.

13. Procédé selon au moins l'une quelconque des revendications 11 à 12, **caractérisé en ce que** l'effluent limpide de l'étape de séparation supplémentaire est recyclé dans l'étape de filtration précédente.

14. Procédé selon au moins l'une quelconque des revendications 1 à 13, **caractérisé en ce que** l'étape de filtration a lieu avec un lavage à contre-courant périodique de la membrane.

15. Procédé selon au moins l'une quelconque des revendications 1 à 14, **caractérisé en ce que** la dispersion initiale est diluée avant le procédé de filtration tangentielle sur membrane.
